Europäisches Patentamt

European Patent Office

Office européen des brevets

(11) Numéro de publication: **0 359 596**
**A1**

## (12) DEMANDE DE BREVET EUROPEEN

(21) Numéro de dépôt: **89401912.4**

(22) Date de dépôt: **04.07.89**

(51) Int. Cl.5: **G 05 B 19/417**

(30) Priorité: **08.09.88 FR 8811731**

(43) Date de publication de la demande:
**21.03.90 Bulletin 90/12**

(84) Etats contractants désignés: **DE ES GB**

(71) Demandeur: **BRIOT INTERNATIONAL**
**41 rue Camille Randoing**
**F-76503 ELBEUF CEDEX (FR)**

(72) Inventeur: **Langlois, Jean-Pierre Marie Fernand**
**124 rue du Champ des Oiseaux**
**F-76000 Rouen (FR)**

**Lecerf, Michel Jean**
**La Côte à blé**
**F-27340 La Saussaye (FR)**

(74) Mandataire: **Barnay, André François**
**Cabinet Barnay 80 rue Saint-Lazare**
**F-75009 Paris (FR)**

(54) Installation de transmission de données, destinée à faciliter et accélérer la fabrication de verres de lunettes.

(57) L'invention concerne une installation de transmission de données, destinée à faciliter et accélérer la fabrication de verres de lunettes.

Cette installation est formée d'appareils incluant au moins un module formant ensemble maître (A) comportant un premier appareil de centrage d'ébauches et de pose d'adaptateurs possédant des moyens de saisie des données associé à une copieuse de montures, et plusieurs modules esclaves (B1, B2,...) reliés audit module (A) et comprenant chacun un autre appareil de centrage d'ébauches et de pose d'adaptateurs, pourvu ou non de moyens de saisie des données et associé à une meuleuse, un ordinateur (C) de gestion pouvant être raccordé au module (A).

Application notamment à la fabrication de verres de lunettes au moyen d'un télétraitement électronique des données les concernant.

FIG. 1

EP 0 359 596 A1

Description

## Installation de transmission de données, destinée à faciliter et accélérer la fabrication de verres de lunettes.

La présente invention concerne d'une manière générale l'usinage des verres ophtalmiques et plus particulièrement une installation destinée à faciliter et accélérer la fourniture des lunettes finies aux utilisateurs.

Suivant la pratique actuelle qui est à peu près universellement utilisée, lorsqu'un client a choisi une monture chez un opticien, celui-ci doit tout d'abord mesurer la position des pupilles du client par rapport à la monture choisie puis, s'il possède les verres appropriés en stock, les centrer sur la monture en fonction de la position repérée des pupilles, et enfin les détourer dans une machine à meuler, s'il en possède une.

Si l'opticien ne possède pas les verres en stock, ce qui est le cas le plus fréquent, il doit les commander à un fournisseur et si en outre il ne possède pas de machine à meuler il doit transmettre au fournisseur toutes les mesures nécessaires pour tailler les verres et les centrer et les monter convenablement sur la monture.

Cette façon de procéder est longue et susceptible de donner naissance à des erreurs et le but de l'invention est de réaliser une installation présentant une grande souplesse de fonctionnement et permettant d'accélérer considérablement la fourniture des lunettes finies en éliminant à peu près tout risque d'erreurs.

FR-2.582.975 au nom de la demanderesse décrit un appareil comportant des moyens électroniques et qui permet d'intégrer les mesures de l'écart et de la hauteur des pupilles, préalablement prises par exemple au moyen de l'appareil décrit dans FR-A-2.620.927 de la demanderesse, de centrer les ébauches de verres sur les montures en calculant les cotes de meulage et de centrer et poser un adaptateur sur l'ébauche.

Cet appareil associé à une copieuse de montures, est commercialisé sous la marque "SCANFORM" et est apte à commander directement une meuleuse.

L'invention vise à réaliser une installation comprenant un ensemble de travail auquel un opticien peut s'adresser directement et associant des appareils Scanform et des meuleuses à un réseau de transmission de données.

Elle a pour objet à cet effet une installation pour la transmission de données caractéristiques de verres de lunettes, destinés à des patients et devant être taillés et fixés dans des montures adaptées, entre des appareils utilisables à cet effet, prévus individuellement chez les opticiens et/ou de manière centralisée dans un laboratoire d'optique, caractérisée en ce que lesdits appareils comprennent au moins un module formant ensemble maître comportant un premier appareil de centrage d'ébauches et de pose d'adaptateurs comportant des moyens de saisie des données associé à une copieuse de montures, et plusieurs modules esclaves reliés audit module formant ensemble maître et comprenant chacun un autre appareil de centrage d'ébauches et de pose d'adaptateurs pourvu ou non de moyens de saisie des données, associé à une meuleuse.

Suivant une autre caractéristique de l'invention, un ordinateur est relié audit module formant ensemble maître, lui-même raccordé par une ligne de transmission de données point-à-point et bidirectionnelle auxdits modules esclaves.

Suivant un mode de réalisation, ledit premier et les autres appareils de centrage d'ébauches et de pose d'adaptateurs sont du type décrit dans FR-2.582.975.

De préférence ledit premier ensemble est un appareil commercialisé par la demanderesse sous la marque "Scanform".

On comprend que grâce à cet agencement un opticien peut soit adresser à ladite installation, par poste ou autrement, une note manuscrite comportant les données nècessaires à l'identification de la monture choisie, à la hauteur et à l'écart des pupilles, et aux verres correcteurs prescrits, soit faire parvenir ces mêmes données par l'intermédiaire d'une ligne téléphonique de transmission de données s'il en possède une, reliée par exemple à un ordinateur personnel de gestion, comme cela est de plus en plus fréquent.

Dans le premier cas les données sont introduites manuellement dans le module formant ensemble maître par un opérateur qui utilise cet ensemble pour effectuer les opérations de centrage, l'un des groupes esclaves recevant les cotes calculées par ledit ensemble et pilotant en conséquence sa meuleuse associée.

Dans le second cas les ordres et les données qui en font partie sont reçus et gérés par ledit ordinateur et transmis les uns après les autres au module formant ensemble maître, et l'opérateur effectue les opérations nécessaires restantes.

Selon une caractéristique de l'invention, chacun des modules maître/esclaves contient une première carte électronique en réalisant le pilotage et la commande et à laquelle sont raccordées une deuxième carte électronique formant processeur de communication et d'archivage et une troisième carte électronique réglant l'alimentation en énergie électrique de l'ensemble du module.

Selon une autre caractéristique de l'invention, la deuxième carte formant processeur de communication et d'archivage contient un bus interne reliant un microprocesseur contrôlant les échanges entre la première carte et les systèmes extérieurs, à différents circuits de traitement électronique de signaux/données, par l'intermédiaire d'une interface bus réalisant l'adaptation et le démultiplexage des signaux du microprocesseur, et d'une interface de synchronisation reliant le microprocesseur à la première carte.

La description qui va suivre, en regard des dessins annexés à titre d'exemples non limitatifs, permettra de bien comprendre comment l'invention peut être mise en pratique.

La figure 1 représente un schéma synoptique d'ensemble de l'installation pour la transmission de données caractéristiques de verres de lunettes, conforme à l'invention

La figure 2 représente un schéma-bloc, d'un module formant maître (A) de l'installati... ...e la figure 1.

La figure 3 représente une variante de réalisation du module formant ensemble maître représenté sur la figure 2.

La figure 4 représente une carte électronique adaptée de façon spécifique pour la mise en oeuvre de l'invention utilisée dans l'un des modules A, B1, B2,... de la figure 1 p... ...r le pilotage et la commande des signaux tra... ...tant dans un tel module.

La figure 5 représente une forme de réalisation, dans laquelle les modules A et C de la figure 1 sont situés à grande distance l'un de l'autre.

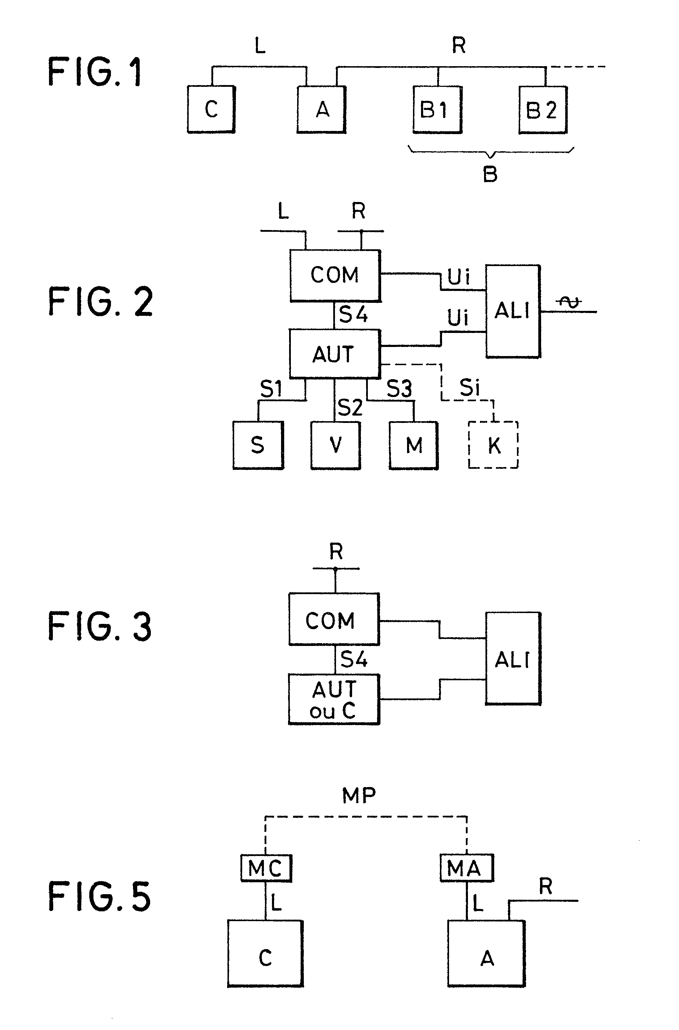

Comme on le voit sur la figure 1, qui montre l'agencement général d'une installation conforme à l'invention, cette dernière comprend essentiellement un appareil maître ou module A formant ensemble maître (qui est unique et est prévu impérativement), des appareils ou modules esclaves B1, B2, ... (multiples et optionnels, également désignés ci-après dans le texte d'une manière générale par la référence B), et un ordinateur C (unique et optionnel).

Les appareils B sont reliés à l'appareil A par une voie R de transmission de données à structures multipoints, tandis que les appareils A et C sont reliés par une voie L de transmission de données à structure point-à-point.

Les appareils A et B possèdent une même architecture, telle que représentée de façon plus détaillée sur la figure 2, leur fonctionnement étant différencié grâce à des signaux électriques particuliers présents dans la ligne R de connexion des différents appareils A et B au réseau.

Les appareils A et B sont constitués de différents éléments mécaniques qui, suivant la spécificité de l'utilisation de l'appareil, sont présents en partie ou en totalité, comme cela est visible sur la figure 2, ces différents éléments sont :

-un mécanisme S de saisie, permettant de lire la forme interne d'une monture de lunettes et de la transformer en une suite de signaux électriques S1;

-un mécanisme V de visualisation de cette forme et de dépose d'une ventouse de préhension d'un verre brut selon un repère géométrique spécifique codé ainsi que la forme au moyen d'une suite de signaux électriques S2, mécanisme qui comprend un clavier à touches permettant à l'opticien de donner des ordres ou des informations traduits ultérieurement en signaux électriques et associés aux autres signaux S2;

-un mécanisme M de meulage du verre brut, permettant de donner à ce dernier un profil identique à la forme décrite, au moyen de signaux électriques S3.

L'ensemble ou une partie de ces mécanismes sont pilotes et commandés par une première carte électronique AUT, dite "automate", par l'intermédiaire des signaux S1, S2 et S3.

Cette carte AUT est elle-même raccordée à une deuxième carte électronique COM, dite processeur de communication et d'archivage, par l'intermédiaire d'une voie de transmission de signaux électriques S4, et c'est sur cette carte que sont reliées les voies R et L de transmission de données.

L'ensemble est complété par une troisième carte électronique ALI, dite carte des alimentations, qui permet de fournir des énergies électriques Ui nécessaires aux autres sous-ensembles à partir du secteur.

D'autres mécanismes, repérés par K, avec ou sans appareillage optique et avec ou sans dispositif de dialogue opérateurs, pourraient être encore insérés dans un appareil A ou B et être raccordés à la carte automate AUT au moyen d'autres voies de transmission de signaux électriques Si. Ils permettraient d'assurer des opérations de l'opticien dans son laboratoire.

Avant de poursuivre de façon plus détaillée la description, on remarquera que l'installation conforme à l'invention permet de transmettre entre les différents appareils pour opticiens toutes leurs données de services et toutes les données propres à chaque patient et nécessaires aux travaux réalisés sur ces appareils. D'une manière générale la liaison est pilotée par un seul de ces appareils qui est le maître logique de la liaison entre tous les appareils et assure la liaison avec le micro-ordinateur de gestion et assure la gestion des archivages.

Cependant on peut raccorder directement un ordinateur sur le réseau, auquel cas la maîtrise peut être alors attribuée à un autre appareil.

Les appareils sont raccordés sur une ligne de transmission série, multipoints et bidirectionnelle, exploitée en semi-duplex.

Dans une configuration particulière l'appareil maître A peut ne pas comporter de mécanismes tels que ceux décrits plus haut, son architecture se réduisant alors à celle représentée sur la figure 3. La carte automate AUT peut même être remplacée par un simple ordinateur ayant ses propres dispositifs de mémorisation, de traitement et de calcul, et éventuellement de dialogues opérateurs. Dans le cas de cette configuration on notera que l'appareil C est alors supprime.

Dans la configuration générale, représentée sur la figure 1, l'appareil C est un ordinateur possédant ses propres dispositifs de mémorisation, de traitement, de calcul et de dialogue opérateur (clavier et écran cathodique par exemple), et est également relié par une interface à la voie L de transmission de données.

L'association de ces appareils A, B, C permet d'automatiser l'ensemble des opérations d'un opticien dans son officine ou dans un laboratoire, depuis l'accueil d'un patient avec la prise en compte de son ordonnance jusqu'à la délivrance d'une paire de lunettes montée.

La présence ou non de plusieurs appareils (seul l'appareil A étant requis dans tous les cas), munis ou non de tous les mécanismes, permet de satisfaire les services de l'opticien selon des performances adaptées à ses besoins.

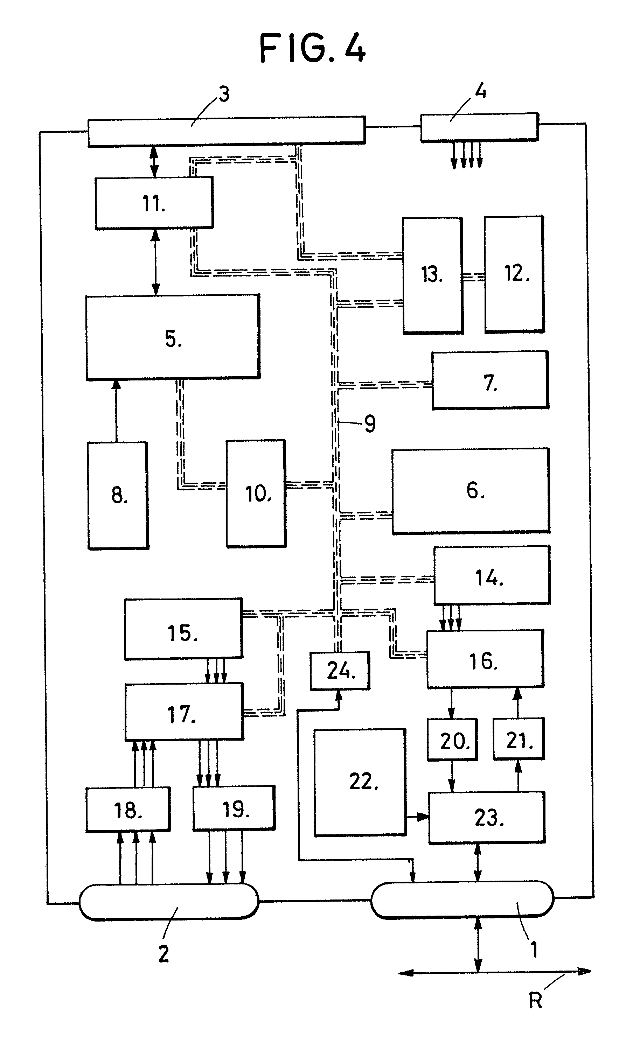

Ci-après on va décrire de façon détaillée le fonctionnement de l'installation, en se rapportant plus précisément à la figure 4, qui représente la carte formant processeur de communication COM, qui est la base du fonctionnement spécifique de l'appareil A pour le traitement envisagé. Cette carte assure le protocole de communication dans l'installation ainsi que la gestion des dossiers et est réalisée d'une manière générale par la technologie dite HC MOS.

Cette carte comprend différents connecteurs de liaison avec les éléments extérieurs et des circuits internes.

Le connecteur 1 transmet selon une transmission bidirectionnelle un ensemble de signaux arrivant de la voie bidirectionnelle R de transmission des signaux.

Le connecteur 2 transmet un ensemble de signaux électriques, comportant des niveaux conformes à la recommandation V24 du Comité CCITT, établit des liaisons bidirectionnelles de transmission de signaux électriques, possédant les niveaux conformes à la recommandation V24/V28 du Comité CCITT, et est relié à l'appareil C, qui est un ordinateur ou, comme on le verra plus tard, est éventuellement un modem.

Le connecteur 3 réunit selon une liaison bidirectionnelle la carte COM à la carte AUT, pour la transmission de signaux désignés antérieurement par S4.

Enfin le connecteur 4 délivre l'énergie nécessaire au fonctionnement de la carte COM recevant des signaux d'alimentation Ui en provenance de la carte ALI.

On va décrire ci-après les différents circuits de la carte COM, représentée sur la figure 4, avant d'en expliquer le fonctionnement détaillé.

D'une manière générale la carte COM comporte un microprocesseur 5 (par exemple du type connu sous le sigle 80C88, à savoir du type à 16 bits avec bus de transmission de données avec 8 bits) Ce microprocesseur est relié notamment à une mémoire de sauvegarde RAM CMOS sauvegardée 6 à 256 k.octets et à une mémoire morte ROM 7 à 128 k.octets par l'intermédiaire d'un bus général de transmission de signaux et de données 9, qui est raccordé à tous les composants du circuit, et au moyen d'une interface 10 de liaison du bus. Par ailleurs le microprocesseur est commandé par une horloge pilotée par quartz.

Une interface de synchronisation 11 est raccordée selon une liaison bidirectionnelle au microprocesseur 5 et au connecteur 3 ainsi qu'au bus 9. Le connecteur 3 et le bus 9 sont en outre raccordés à une mémoire RAM d'échange 12 par l'intermédiaire d'un multiplexeur 13.

Deux horloges 14 et 15 sont en outre raccordées au bus 9 et chacune respectivement selon une liaison unidirectionnelle à un émetteur/récepteur synchrone/asynchrone universels respectifs 16 et 17 également reliés au bus 9. L'émetteur/récepteur 17 est relié au connecteur 2 par l'intermédiaire d'une liaison unidirectionnelle d'entrée au moyen de l'adaptateur 18 et par l'intermédiaire d'une liaison unidirectionnelle au moyen de l'adaptateur 19.

L'émetteur/récepteur 16 est relié à un mélangeur 23 par l'intermédiaire d'un dispositif d'isolation de sortie 20 et par l'intermédiaire d'un dispositif d'isolation d'entrée 21, le mélangeur étant raccordé à un dispositif d'alimentation isolée à découpage 22. En outre le mélangeur est relié selon une liaison bidirectionnelle au connecteur 1.

Par ailleurs le bus 9 est raccordé au connecteur 1 par l'intermédiaire d'une interface 24 de transmission d'adresses.

Pour le fonctionnement on va considérer deux cas, à savoir la configuration automatique, ce qui est le cas en général, et la configuration réduite, qui concerne le cas où l'appareil maître A peut ne pas avoir de dispositif mécanique ou optique propre à une opération de laboratoire d'opticien.

Configuration automatique:

Le connecteur 1 délivre un ensemble de signaux arrivant de la voie R de transmission de données : Les premiers signaux d'adresses sont transmis directement par l'interface de lecture 24 au microprocesseur 5 par l'intermédiaire du bus 9 et de l'interface du bus interne 10; grâce au programme mémorisé dans la mémoire du microprocesseur, ce dernier assure un fonctionnement de maître, correspondant à l'appareil A, ou un fonctionnement d'esclave, correspondant à l'un des appareils B (B1, B2,...); ces signaux permettent) de distinguer l'un des appareils B;
les autres signaux concernent les échanges de données entre les appareils et seront décrits plus loin.

Comme indiqué plus haut le connecteur 2 transmet un ensemble de signaux électriques entre la carte et l'appareil C.

Pour les appareils du type C, tous les signaux présents sur ce connecteur 2 restent inutilisés.

L'un de ces signaux, après son adaptation en 18 est transmis au microprocesseur 5 par les circuits 17 et 10 pour indiquer la présence d'un appareil C et régit en conséquence le fonctionnement de l'appareil maître A.

Création d'un dossier patient :

Dans le cas de la configuration normale l'appareil C est présent et donc l'opticien enregistre, à partir du clavier et de l'écran de cet appareil, toutes les données relatives à un patient et notamment celles contenues dans son ordonnance.

A partir de là, toutes les données sont codées en une suite de signaux électriques transmis par la voie de transmission L en direction de la carte de communication COM de l'appareil maître A. Sur la carte COM, ces signaux sont reçus au niveau du connecteur 2, mis en forme par les circuits 17 et 18 et transmis par l'intermédiaire de l'interface 10 au microprocesseur 5.

Celui-ci les analyse et envoie lui-même d'autres signaux de commande et de synchronisation à l'ordinateur, signaux qui sont transmis par l'interface 10, par le circuit 17 et par le circuit 19, qui les mettent en forme, au connecteur 2.

Parallèlement le microprocesseur 5 d'une part mémorise toutes les données reçues de l'ordinateur dans sa propre mémoire 6 et d'autre part envoie toutes ces données aux appareils esclaves B. A cet effet le microprocesseur 5 transcode ces données sous la forme de signaux électriques transmis par l'interface 10 au circuit 16, qui lui-même les transmet au moyen du dispositif d'isolation 20, du circuit mélangeur 23 et du connecteur 1, à tous les appareils B raccordés à la même voie R de transmission de données.

Tous les connecteurs B reçoivent alors, au niveau de leur connecteur 1, ces signaux qui aboutissent au microprocesseur 5 par l'intermédiaire des circuits 23, 21, 16 et 10. Les microprocesseurs 5 des appareils B, qui reconnaissent leur fonctionnement en mode esclave comme décrit plus haut, décodent les signaux et mémorisent toutes les données correspondantes arrivant de l'ordinateur C par l'intermédiaire de l'appareil maître A, dans sa mémoire 6.

A un instant donné, tous les appareils A et B conservent dans leur mémoire 6 les informations relatives aux patients, qui ont été introduites par l'opticien sur le clavier-écran de l'ordinateur C.

### Début du travail de l'opticien :

Parallèlement à ces opérations, un ou plusieurs opticiens travaillent sur les appareils A ou B ; à partir des différents mécanismes S, V, M ou d'autres mécanismes K, ils communiquent des ordres transmis sous forme de signaux électriques S1, S2, S3 ou Si et interprétés par les cartes automates AUT.

La première information nécessaire est l'identification du patient sur lequel porte le travail de l'opticien. Les signaux codant cette identification sont transmis par la carte automate AUT vers la carte communication COM de l'appareil concerné, par l'intermédiaire du connecteur 3, sont mémorisés dans la mémoire RAM 12, qui reste en communication avec la carte automate par l'intermédiaire du multiplexeur 13 et du connecteur 3; le microprocesseur 5 est ensuite activé par l'un des signaux par l'intermédiaire de l'interface de synchronisation 11 et positionne le multiplexeur 13 pour se mettre en communication avec la mémoire d'échange RAM 12.

Le microprocesseur 5 peut rechercher les données relatives au patient en comparant d'une part des signaux codant l'identification du patient dans la mémoire 12, décrite par la carte AUT, et d'autre part des signaux codant les identifications de tous les patients dans la mémoire 6.

En fonction du résultat de la comparaison, le microprocesseur 5 introduit les données (compte-rendu négatif ou données patients) codées en signaux électriques dans la mémoire 12, place à nouveau le multiplexeur 13 en position de repos et en avertit la carte AUT par des signaux de synchronisation, par l'intermédiaire de l'interface 11 du connecteur 3.

Lorsque la recherche de patient considérée aboutit à un résultat négatif, le microprocesseur 5 de l'appareil A présente la demande de l'opticien à l'appareil C en codant l'identification du patient en signaux électriques envoyés à l'ordinateur au moye des circuits 10, 17, 19 et du connecteur 2.

Après sa propre recherche, l'ordinateur envoie alors par le même dispositif que celui décrit ci-dessus les données nécessaires (compte-rendu négatif ou données patients); le microprocesseur 5 décode les signaux reçus de l'ordinateur, les mémorise dans sa mémoire 6 et les envoie à tous les appareils esclaves B comme indiqué précédemment.

Lorsque la recherche du patient aboutit à un résultat négatif, le microprocesseur 5 des appareils B retransmet la demande de l'opticien vers l'appareil maître A en codant l'identification du patient en signaux électriques envoyés à l'appareil A au moyen des circuits 10, 16, 20 et 23 du connecteur 1.

L'appareil A reçoit alors ses signaux d'identification du patient demandés par son connecteur 1 et ses circuits 23, 21, 16 et 10, et le microprocesseur 5 de l'appareil A recherche les données patient au moyen d'une comparaison du type indiqué plus haut; si la recherche aboutit à un résultat négatif, la demande est retransmise vers l'ordinateur C qui donne sa réponse comme indiqué plus haut; enfin le microprocesseur 5 de l'appareil A, qui a trouvé ou reçu de la part de l'ordinateur les données nécessaires (compte-rendu négatif ou données patients), les rediffuse vers tous les appareils B qui reçoivent les signaux et, après traitement, les mémorisent dans leurs propres mémoires 6, comme indiqué précédemment.

Ainsi, sous les ordres de l'opticien, toutes les cartes automates AUT des appareils A ou B reçoivent les données nécessaires au traitement des opérations du patient désigné, lorsqu'elles réitèrent leur demande. Ces données présentes sous la forme de signaux électriques mémorisés dans la mémoire 12 restent à la disposition du microprocesseur de la carte AUT par l'intermédiaire du multiplexeur 13, qui est au repos, et du connecteur 3.

Pendant toutes les opérations exécutées par l'opticien, les données sont exploitées et éventuellement modifiées par la carte AUT.

### Fin du travail de l'opticien :

Lorsque l'opticien a terminé les opérations relatives à un patient, il donne un ordre de fin par l'un des mécanismes S, V, M ou d'un autre mécanisme K. Cet ordre présent sous la forme d'un signal électrique est envoyé par l'intermédiaire du connecteur 3 et de l'interface 11 au microprocesseur 5 de la carte comme de l'appareil A ou B concerné.

Après commande du signal basculant le circuit multiplexeur 13, le microprocesseur 5 analyse l'ordre de l'opticien transmis dans la mémoire 12 et exécute les opérations suivantes :
- il met à jour les signaux électriques codant les données du patient dans sa propre mémoire 6 et en particulier il peut totalement effacer ces données;
- s'il s'agit d'un appareil maître A, il transforme ces signaux pour les envoyer aux appareils esclaves B, par l'intermédiaire des circuits 10, 7, 20 et 23 et du connecteur 1, comme indiqué ci-dessus;

- s'il s'agit d'un appareil esclave B, il transforme ces signaux pour les communiquer à l'appareil maître A, par l'intermédiaire des circuits 10, 16, 20 et 23 du connecteur 1. L'appareil A reçoit alors ces signaux par l'intermédiaire de son connecteur 1 et de ses circuits 23, 21, 16 et 10. Le microprocesseur 5 de l'appareil exécute la même opération que celle qu'il aurait exécutée si les mêmes données lui avaient été communiquées par sa carte automate AUT, c'est-à-dire qu'il met à jour les données patient dans sa propre mémoire 6 et les transmet en direction de tous les appareils esclaves B par l'intermédiaire du réseau R.

Par conséquent après une opération réalisée par l'opticien sur l'un ou l'autre des appareils A ou B, les données de tous les autres appareils ont été mises à jour. Si cela est nécessaire, l'opticien peut reprendre ou poursuivre les opérations sur n'importe quel appareil A ou B.

### Mise à jour de l'ordinateur :

A tout moment l'ordinateur C peut consulter l'appareil maître A pour connaître le contenu des données patient gérées par l'installation et notamment après un arrêt prolongé de son propre fonctionnement.

A cet effet il envoie par l'intermédiaire de la liaison L une suite de signaux électriques codant la fonction qu'il veut assurer, ces signaux étant reçus au niveau du connecteur 2 de la carte COM de l'appareil A, mis en forme par le circuit 18 et envoyés au microprocesseur 5 par les circuits 17 et 10.

Celui-ci analyse alors la demande de l'ordinateur en exploitant ou en modifiant les données patient codées en signaux électriques dans sa mémoire 6; puis il donne un compte-rendu ou une réponse à l'ordinateur C au moyen d'une suite de signaux électriques renvoyés par l'intermédiaire des circuits 10, 17, 19 et du connecteur 2.

Parmi les demandes de l'ordinateur, certains signaux les codant désignent une installation particulière, repérée par une chaîne de caractères ou chiffres et mémorisée dans la carte automate AUT; si ces signaux ne sont pas reconnus par le microprocesseur 5 de la carte COM de l'appareil A après comparaison aux signaux mémorisés, le fonctionnement ultérieur du système peut être modifié ou même entièrement bloqué, ce qui protège ainsi le caractère confidentiel de tout ou partie des informations vis-à-vis d'un ordinateur tiers non autorisé.

Si cela est nécessaire, le microprocesseur 5 de l'appareil A diffuse la demande de l'ordinateur en direction des appareils esclaves B au moyen du réseau R comme indiqué plus haut. Chaque appareil B mémorise alors les données patient codées en signaux électriques dans sa propre mémoire.

Par ailleurs le fonctionnement décrit précédemment entre les appareils A et C en liaison directe par l'intermédiaire de la voie L de transmission de données peut se produire lorsque les appareils A et C sont situés à distance l'un de l'autre et sont alors reliés à la même voie L de transmission de données, mais au moyen de modems MA et MC comme cela est représenté sur la figure 5. On notera que le rôle de ces modems est simplement d'adapter la nature électrique des signaux échangés pour permettre leur transmission sur une grande distance par l'intermédiaire d'un milieu particulier désigné par MP.

### Configuration réduite :

Comme cela a été mentionné précédemment, l'appareil maître A peut ne comporter aucun dispositif mécanique ou optique propre à une opération de laboratoire d'opticien et, dans ce cas, la carte automate AUT de cet appareil est équivalente à un simple ordinateur disposant de circuits de calcul, de traitement, de mémorisation et de dialogues opérateurs (clavier, écrans...) et peut même remplacer l'appareil C, qui devient alors inutile.

Il est même possible que l'appareil maître A soit réalisé à partir d'un ordinateur incluant la carte de communication COM telle que décrite précédemment, ou bien qu'une partie des fonctions de la carte COM soit directement exécutée par l'ordinateur lui-même, auquel cas cet appareil serait relié directement par interface au réseau R, avec une transmission de signaux indentiques à ceux que présente le connecteur 1 d'une carte COM.

On peut résumer comme suit le fonctionnement de l'installation. Le fonctionnement de cette dernière est régi essentiellement par la carte de communication COM représentée sur la figure 4, qui se raccorde à un bus bidirectionnelle multipoints R, à un ordinateur local C ou à un ordinateur décentralisé MA (modem) et à la carte automate AUT, les alimentations étant fournies par le connecteur 4. Le microprocesseur 5 commande les échanges entre la carte AUT et les éléments extérieurs ordinateur et réseau et gère les protocoles spécifiques aux applications liées aux opérations de l'opticien stocke les données patients dans sa mémoire sauvegardée 6 programmée par sa mémoire morte 7 et commandée de façon cadencée par son horloge de contrôle 8 pilotée par quartz.

Le bus interne 9 véhicule toutes les informations nécessaires aux différents circuits et l'interface 10 de liaison du bus adapte et démultiplexe les signaux du microprocesseur. L'interface de synchronisation 11 assure l'arbîtrage entre la carte automate AUT et le microprocesseur 5 pour l'obtention de l'accès à la mémoire 12, qui permet de transférer massivement les informations de l'un à l'autre, le multiplexeur 13 assurant l'accès à cette mémoire.

Les horloges programmables 14 et 15 commandent les vitesses de transmission des deux liaisons série gérées par les émetteurs/récepteurs synchrone/asynchrone universels 16 et 17.

Les adaptateurs 18 et 19 transforment les niveaux électriques de la logique interne en niveaux V24/V28 compatibles avec les ordinateurs et les modems.

Les dispositifs d'isolation 20 et 21 isolent galvaniquement et adaptent la logique interne au réseau R à l'aide du dispositif d'alimentation isolée à découpage 22.

Le mélange 23 assure la réunion des signaux d'entrée/sortie sur les deux fils de transmission d'informations du réseau R.

**Revendications**

1. Installation pour la transmission de données caractéristiques de verres de lunettes, destinés à des patients et devant être taillés et fixés dans des montures adaptées, entre des appareils utilisables à cet effet, prévus individuellement chez des opticiens et/ou de manière centralisée dans un laboratoire d'opticien, caractérisée en ce que lesdits appareils comprennent au moins un module formant ensemble maître (A) comportant un premier appareil de centrage d'ébauches et de pose d'adaptateurs possédant des moyens de saisie des données, associé à une copieuse de montures, et plusieurs modules esclaves (B1, B2,...) reliés audit module formant ensemble maître et comprenant chacun un autre appareil de centrage d'ébauches et de pose d'adaptateurs, pourvu ou non de moyens de saisie des données et associé à une meuleuse.

2. Installation selon la revendication 1, caractérisée en ce qu'un ordinateur (C) est relié audit module formant ensemble maître (A), lui-même raccordé par une ligne de transmission de données multipoints et bidirectionnelle, auxdits modules esclaves (B1, B2,...).

3. Installation selon l'une des revendications 1 ou 2, caractérisée en ce que chacun des modules maître/esclaves (A, B1, B2,...) contient une première carte électronique (AUT) en réalisant le pilotage et la commande et à laquelle sont raccordées une deuxième carte électronique (COM) formant processeur de communication et d'archivage et une troisième carte (ALI) électronique réglant l'alimentation en énergie électrique de l'ensemble du module.

4. Installation selon la revendication 3, caractérisée en ce que la deuxième carte (COM) formant processeur de communication et d'archivage contient un bus interne (9) reliant un microprocesseur (5) contrôlant les échanges entre la première carte (AUT) et les systèmes extérieurs, à différents circuits de traitement électronique de signaux/données, par l'intermédiaire d'une interface bus (10) réalisant l'adaptation et le démultiplexage des signaux du microprocesseur (5) et d'une interface de synchronisation (11) reliant le microprocesseur à la première carte (AUT).

5. Installation selon la revendication 4, caractérisée en ce qu'il est prévu un connecteur (1) reliant la carte (COM) à la ligne bidirectionnelle et multipoints et raccordé au bus (9) d'une part par une interface (24) de transmission d'adresse et d'autre part par des moyens d'entrée/sortie (14, 16, 20-23).

6. Installation selon la revendication 5, caractérisée en ce que les moyens d'entrée/sortie (14, 16, 20-23) incluent une horloge programmable (14) raccordée entre le bus (9) et un dispositif d'émission/réception synchrone/asynchrone (16) lui-même raccordé au bus (9) et à un mélangeur (23) par l'intermédiaire d'un dispositif d'isolation de sortie (20) et d'un dispositif d'isolation-d'entrée (21), chacun de type unidirectionnel, le mélangeur, qui est raccordé à un dispositif d'alimentation isolée à découpage (22), étant relié selon une liaison bidirectionnelle au connecteur (1).

7. Installation selon l'une quelconque des revendications 5 à 6, caractérisée en ce qu'il est prévu un connecteur (2) reliant la carte (COM) à un ordinateur (C), éventuellement par un modem (MA;MC) et raccordé au bus (10) par des moyens d'entrée et de sortie (15, 17-19).

8. Installation selon la revendication 7, caractérisée en ce que les moyens d'entrée/sortie (15, 17-19) incluent une horloge (15) reliée au bus (9) et un émetteur/récepteur synchrone/asynchrone (17) lui-même raccordé au bus (9) et raccordé au connecteur (2), selon des liaisons unidirectionnelles respectives, par un adaptateur d'entrée (18) et par un adaptateur de sortie (19).

FIG.1

FIG. 2

FIG. 3

FIG.5

# FIG. 4

<table>
<tr><td>Office européen des brevets</td><td>**RAPPORT DE RECHERCHE EUROPEENNE**</td><td>Numero de la demande</td></tr>
</table>

EP    89 40 1912

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4027246 (CACCOMA ET AL.)<br>* colonnes 1 - 4; figure 1 *<br>--- | 1-8 | G05B19/417 |
| A | TECHNISCHE RUNDSCHAU<br>vol. 79, no. 49, 4 décembre 1987, BERN,SCHWEIZ<br>pages 96 - 101; PAWELLEK ET HARTMUT:<br>"MONTAGELEITSYSTEME FUR<br>KUNDENAUFTRAGSORIENTIERTE JUST-IN-TIME<br>PRODUKTION"<br>* le document en entier *<br>--- | 1-8 | |
| A,D | EP-A-0206860 (BRIOT INTERNATIONAL)<br>* le document en entier *<br>----- | 1-8 | |

| | DOMAINES TECHNIQUES RECHERCHES (Int. Cl.5) |
|---|---|
| | G05B |

Le présent rapport a été établi pour toutes les revendications

| Lieu de la recherche | Date d'achèvement de la recherche | Examinateur |
|---|---|---|
| LA HAYE | 22 DECEMBRE 1989 | MOYLE J.F. |